**Europäisches Patentamt**

(19) **European Patent Office**

**Office européen des brevets**

(11) Publication number: **0 046 320**
**B1**

(12) **EUROPEAN PATENT SPECIFICATION**

(45) Date of publication of patent specification: **28.11.84**

(21) Application number: **81200879.5**

(22) Date of filing: **04.08.81**

(51) Int. Cl.³: **C 08 F 2/24,** C 08 F 212/06,
C 08 F 279/04 // (C08F212/06,
220/44),(C08F279/04, 212/06,
220/44)

(54) Process for the preparation of a copolymer.

(30) Priority: **20.08.80 NL 8004698**

(43) Date of publication of application:
**24.02.82 Bulletin 82/08**

(45) Publication of the grant of the patent:
**28.11.84 Bulletin 84/48**

(84) Designated Contracting States:
**AT BE DE FR GB IT NL SE**

(56) References cited:
**FR-A-2 257 612**
**GB-A-1 475 449**

(73) Proprietor: **STAMICARBON B.V.**
**Postbus 10**
**NL-6160 MC Geleen (NL)**

(72) Inventor: **Tijssen, Jan**
**Jos Klijnenlaan 395**
**NL-6164 AJ Geleen (NL)**
Inventor: **Van der Loos, Jozef Lambertus Maria**
**Rijksweg Zuid 146**
**NL-6134 AE Sittard (NL)**
Inventor: **Creemers, Henricus Maria Johannes**
**Cornelis**
**Einthovenstraat 7**
**NL-6164 GZ Geleen (NL)**

(74) Representative: **Hatzmann, Marinus Jan et al**
**OCTROOIBUREAU DSM P.O.Box 9**
**NL-6160 MA Geleen (NL)**

Courier Press, Leamington Spa, England.

# 0 046 320

**Description**

The invention relates to a process for the preparation of a copolymer of a vinyl aromatic compound and an unsaturated nitrile, optionally in the presence of a rubber, by polymerizing an emulsion of the vinyl aromatic compound, the unsaturated nitrile, optionally the rubber, one or more emulsifiers, one or more organosulfur chain regulators and one or more peroxides and processing the latex, obtained after completion of the polymerization, after coagulation to copolymer. Such a process is generally known. See, for instance, European patent application no. 419 laid open to public inspection.

From US—A—4,013,824 it is known to carry out emulsion polymerizations of, among others, vinyl aromatic compounds with unsaturated nitriles in the presence of organosulphur compounds acting as chain length regulators, in which process, in order to improve the efficiency of the use of the organosulphur compound, the emulsifier, the organosulphur compound and the monomers to be polymerized are mixed before the polymerization. In the process according to this patent specification there is an improvement of the effectiveness of the organosulphur compounds in emulsion polymerization systems.

In applying this process, that is the pre-mixing of the monomers with the organosulphur compounds and emulsifier to the emulsion polymerization of styrene and/or $\alpha$-methylstyrene and acrylonitrile, optionally in the presence of the rubber, the effect described in this patent specification occurs. This improvement of the effectiveness of the organosulphur compound is rather limited, however, certainly compared with the effect which occurs in the preparation of styrene-butadiene rubber. Moreover, it has been found in practice that in this process much coagulum is formed.

The purpose of the invention therefore is to provide a process of the nature described above, in which the problem of the formation of coagulum during the polymerization does not occur or only to a limited extent, while, moreover, the effectiveness of the organosulphur compound shows a distinct improvement.

Now the process according to the invention is characterized in that an emulsion of the vinyl aromatic monomer, organosulfur chain length regulator and emulsifier is prepared in water, after which the unsaturated nitrile and the peroxide are added jointly or separately and the polymerization is started. This process is preferably applied in the preparation of copolymers of styrene and/or $\alpha$-methylstyrene and acrylonitrile, respectively in the preparation of these copolymers in the presence of a rubber, such as polybutadiene, styrene-butadiene rubber, acrylate rubber, butadiene-acrylonitrile rubber, chloroprene rubber, isoprene rubber, butadiene-acrylate rubber, EPT-rubber, and the like.

The fact is that, surprisingly, it has been found that in the process according to the invention there are hardly any or no problems with the formation of coagulum during the polymerization, while yet a proper effectiveness of the organosulphur compound is obtained as well. In practice this means that considerable improvement in the flow behaviour of the product is obtained.

The decrease in the formation of coagulum has not yet been clearly explained, but as far as the improvement of the effectiveness of the organosulphur compound is concerned, also in relation to what was known already from the American patent specification 4,013,821, the surmise has been raised, after a long study, that the formation of a complex between the unsaturated nitrile and the organosulphur compound during the pre-mixing of the organosulphur compound, the emulsifier, the water and the monomers is responsible for the decrease in effectiveness. Surprisingly, it has now been found that in the process according to the invention this complex is not formed or formed only to a very limited extent.

The pre-mixing of the vinyl aromatic compound, organosulfur chain length regulator, water and emulsifier, that is the making of a 'pre-emulsion', can be done in various ways. The condition which must always be complied with, however, is that a homogeneous and stable emulsion is obtained. The pre-mixing can be effected in a separate stirred vessel, in a so-called 'in line' mixer, or in a combination of the two possibilities, if so desired.

The stirring rate during the pre-mixing may have a great influence on the final result. Preferably tip speeds of the stirrer higher than 1 m/sec, more specifically higher than 1.5 m/sec, are therefore chosen. The maximum tip speed is not so important, but will generally not be higher than 30 m/sec. The tip speed applied also strongly depends on the kind of mixer to be used. In an 'in line' mixer it will be considerably higher than in a stirred vessel.

The time during which pre-mixing is effected is generally inversely proportional to the tip speed applied. The higher the tip speed, the shorter the mixing time may be. Preferably, however, mixing times ranging from 0.01 sec to 120 min are chosen, but shorter or longer mixing times are possible as well. Preferably mixing is carried out for 5 to 15 minutes, depending on the kind of mixer.

The pre-mixing of the vinyl aromatic compound, the chain length regulator with water and the emulsifier is preferably carried out at temperatures ranging from 10 to 40°C.

It is not necessary for all emulsifier to be added at the start. It may well be that only a part of the emulsifier is used for making the pre-emulsion, upon which the remaining quantity is added later, for example during the polymerization.

The present invention is in principle applicable to any chain length regulator on the basis of an organosulphur compound. Suitable species of organosulphur compounds comprise the widely used

2

# 0 046 320

mercaptans, as well as the dialkyl dixanthogens, diaryl disulphides, mercapto thiazoles, tetra-alkyl-thiuram mono- and disulphides, etc., separately or mixed with each other.

The commercially most widely used chain length regulators are particularly the mercaptan compounds, and of these the hydrocarbyl mercaptans with 8—20 carbon atoms per molecule are now much used. More specifically preference is given to mercaptans with a tertiary alkyl compound.

The quantity of organosupphur compound may vary within wide limts, depending on the mixture chosen, the specific compound, polymerization temperature, emulsifier and other variables relating to the recipe. A good result can be achieved by using 0.01—5 parts, preferably 0.05—2 parts, per 100 parts of monomer organosulphur compound (weight). Suitable organosulphur compounds comprise n-octyl mercaptan, n-dodecyl mercaptan, tertiary dodecyl mercaptan, tertiary nonyl mercaptan, tertiary hexadecyl mercaptan, tertiary octadecyl mercaptan,- tertiary eicosyl mercaptan, secondary octyl mercaptan, secondary tridecyl mercaptan, cyclododecyl mercaptan, cyclododecadienyl mercaptan, aryl mercaptan, such as 1-naththalene thiol, etc., bis(tetrahydrofuralxantogen), diphenyl disulphide, tetra-methylthiuram disulphide, 2-mecaptobenzathiozole and the like. Mixtures of these compounds can also be used.

As emulsifier, widely different compounds can be used, such as disproportionated rosin soap, fatty acid soap, aryl sulphonates, alkylaryl sulphonates and other surface-active compounds and mixtures thereof. Non-ionogenic emulsifiers, such as polyethers and polyols, can also be used. The quantities of emulsifiers used depend on the type of emulsifier, as well as on the reaction parameters and the concentrations of polymerizable monomer in the emulsion polymerization system. Preference is given to anionic emulsifiers.

Suitable compounds yielding free radicals are, for the emulsion polymerization process, organic or inorganic peroxides, hydroperoxides, azo compounds, as well as redox initiator systems. These compounds can be added at the beginning of the polymerization process. It is also possible to add these compounds partly at the beginning and partly in the course of the polymerization process.

Preferably alkali or ammonium persalts and/or redox systems are chosen as initiators. Particularly potassium persulphate, ammonium persulphate and sodium persulphate must be mentioned. Examples of suitable redox systems are persalts (for instance perchlorates or persulphates), tertiary butyl hydroperoxide, cumene hydroperoxide, diisopropylbenzenhydroperoxide and methylcyclohexyl-hydroperoxide, combined with reductants based on acids containing sulphur in a low valence state, such as sodiumformaldehydesulphoxylate, bisulphide, pyrosulphide, or with organic bases, such as triethanolamine, with dextrose, sodium pyrophosphate and mecaptans or combinations thereof, optionally in combination with metal salts, such as ferrous sulphate. These initiators or initiator systems can be dosed in one or more steps or even gradually. Preference is given to water-soluble initiators.

As indicated, the emulsion polymerization can be successfully carried out in the presence of a previously prepared rubber latex. Beside the formed free copolymer of the vinyl aromatic compound and the unsaturated nitrile, a graft, copolymer will be formed as well, contributing to the improvement of the impact strength of the copolymer.

In such a case the rubber latex should preferably not be premixed with the vinyl aromatic compound, chain length regulator, emulsifier and water. The rubber latex, the pre-mixed emulsion, the unsaturated nitrile, the peroxide, and if necessary, the other substances required for the polymerization are therefore then added separately to the polymerization reactor.

The pH at which the emulsion polymerization is carried out mainly depends on the choice of the type of emulsifier. If an ionogenic emulsifier is chosen, it will generally be effective only in a certain pH range. The result is that the polymerization must be carried out within that pH range. If non-ionogenic emulsifiers are used, there will be greater freedom in respect of the choice of the pH. This choice will then be determined by factors other than stability of the emulsion.

The temperature at which the polymerization is carried out will be determined to large extent by the choice of initiators. Generally, however, this temperature ranges from 40 to 120°C.

The polymerization can be carried out continuously, semicontinuously, or batchwise.

After completion of the polymerization, the polymer latex is coagulated, optionally after extra removal of non-converted monomers, by the addition of one or more compounds which make the emulsifier applied ineffective. In case of emulsifiers depending on the pH, an acid or a base is mostly chosen for that purpose, whereas, in applying emulsifier systems sensitive to high electrolyte concentrations, calcium chloride or comparable compounds are often added. The coagulated polymer is subsequently filtered off or centifuged, washed, centrifuged again, and dried, upon which a polymer powder is obtained. The powder can, optionally after mixing with other polymers, colourants, additives, auxiliaries, etc., be granulated or processed direct into objects.

The invention also relates to the copolymer obtained while applying the process described above and to objects wholly or partly made from this copolymer.

The invention is now elucidated by means of some examples but is by no means limited thereto.

## Examples

In a test reactor a series of emulsion polymerizations of styrene and acrylonitrile, in the presence of a rubber (polybutadiene), was carried out. In these processes a so-called 'general purpose' grade of

3

ABS was prepared.

Successively a test was made in which all substances, water, monomers, emulsifier, rubber latex etc. were added direct to the reactor. In the subsequent series of tests water, monomers (styrene and acrylonitrile) emulsifier and chain length regulator were pre-mixed, and in the final series of tests only water, styrene, emulsifier and chain length regulator were pre-mixed.

In addition, tests were made with different tip speeds furing the pre-mixing.

## Example A

To a test reactor of an effective capacity of 100 l, water, styrene, acrylonitrile, emulsifier (the potassium salt of disproportionated hydroabietic acid), chain length regulator (tert. dodecyl mercaptan), polybutadiene latex and initiator were added.

Subsequently the polymerization was started. After completion of the polymerization the polymer latex obtained was coagulated and further processed to powder with a moisture content lower than 0.2% by weight. The results of this test are included in table 1.

## Example B

Analogous to example A, a polymerization of styrene, acrylonitrile and polybutadiene was carried out, in which process water, emulsifier, styrene, acrylonitrile and chain length regulator were premixed for 5 minutes at a tip speed of 2.8 m/s. The other substances were added direct to the reactor. The results are included in table 1.

## Example I

Analogous to example A, a polymerization was carried out, in which process water, emulsifier, styrene and chain length regulator were pre-mixed for 5 minutes and at a tip speed of 2.8 m/s. The other substances were added direct to the reactor. The results are included in table 1.

## Example II

In the same way as in example I, a polymerization was carried out, in which process pre-mixing was effected for 5 minutes at a tip speed of 4.2 m/s. The results are included in table 1.

Table 1

| example | spiral flow length* cm | coagulum % by wt | impact resistance** kJ/m² | HDT*** °C |
|---|---|---|---|---|
| A | 70 | 0.5 | 44.0 | 92 |
| B | 72 | 2.3 | 44.2 | 92 |
| I | 85 | 0.5 | 44.1 | 92 |
| II | 84 | 0.4 | 45.8 | 92 |

*H. Ebneth, K. Böhm, Plastverarbeiter, 19 (1968), pages 261—269.
**ASTM D 256 A.
***ASTM D 648 (annealed).

In the same way as in example A a series of experiments was made with the preparation of a well flowing ABS grade.

## Example C

Analogous to example A, a polymerization was carried out, in which process all substances were added direct to the reactor. The results are included in table 2.

## Example D

Analogous to example B, a polymerization was carried out, in which process water, styrene, acrylonitrile, emulsifier and chain length regulator were pre-mixed for 5 minutes at a tip speed of 2.8 m/s. The results are included in table 2.

## Example III

Analogous to example I, a polymerization was carried out, in which process water, styrene, chain length regulator and emulsifier were pre-mixed for 5 minutes at a tip speed of 2.8 m/s. The results are mentioned in table 2.

4

Table 2

| example | spiral flow length* cm | coagulum % by wt | impact resistance** kJ/m² | HDT*** °C |
|---|---|---|---|---|
| C | 140 | 0.4 | 22.0 | 92 |
| D | 142 | 3.1 | 21.5 | 92 |
| III | 161 | 0.4 | 21.9 | 92 |

\*.\*\* and \*\*\*: See table 1.

A third series of experiments was carried out in order to determine the effect of the pre-mixing in the copolymerization process of $\alpha$-methylstyrene and acrylonitrile.

Examples E, F and IV

In example E a polymerization was carried out analogous to example A, in which process all substances were added direct to the reactor.

In example F a pre-emulsion of water, $\alpha$-methylstyrene, acrylonitrile, emulsifier and chain length regulator was made first by pre-mixing these substances for 5 minutes at a tip speed of 2.8 m/s.

Example IV was carried out in the same way as example F, however without acrylonitrile being present in making the pre-emulsion.

Table 3

| example | spiral flow length* cm | coagulum % by wt | HDT*** °C |
|---|---|---|---|
| E | 48 | 0.2 | 116 |
| F | 49 | 3.2 | 116 |
| IV | 67 | 0.3 | 117 |

\* and \*\*\*: See table 1.

**Claims**

1. Process for the preparation of a copolymer of a vinyl aromatic compound and an unsaturated nitrile, optionally in the presence of a rubber, by polymerizing an emulsion of the vinyl aromatic compound, the unsaturated nitrile, optionally the rubber, one or more emulsifiers, one or more organosulfur chain length regulators and one or more peroxides and processing the latex, obtained after completion of the polymerization, after coagulation to copolymer, characterized in that an emulsion of the vinyl aromatic monomer, organosulfur chain length regulator and emulsifier is prepared in water, after which the unsaturated nitrile and initiator are added, separately or jointly, and the polymerization is started.

2. Process according to claim 1, characterized in that a copolymer is prepared of styrene and/or $\alpha$-methylstyrene and acrylonitrile.

3. Process according to claim 1, characterized in that a graft copolymer is prepared of styrene and/or $\alpha$-methylstyrene and acrylonitrile on a polybutadiene latex.

4. Process according to any one or more of the claims 1—3, characterized in that the emulsion of the vinyl aromatic monomer, organosulfur chain length regulator and emulsifier is prepared in water by stirring at a tip speed of at least 1.0 m/s.

5. Process according to claim 4, characterized in that the tip speed is at least 1.5 m/s.

6. Process according to any one of the claims 1—5, characterized in that the tip speed is 30 m/s at most.

7. Process according to any one or more of the claims 1—6, characterized in that the emulsion of cinyl aromatic monomer, organosulfur chain length regulator and emulsifier is prepared in water at a temperature of between 10 and 40°C.

8. Process according to any one or more of the claims 1—7, characterized in that, as emulsifier, an anionic emulsifier is used.

9. Process according to claim 3, characterized in that a water-soluble initiátor is used.

10. Process according to any one or more of the claims 1—9, characterized in that, as organosulfur chain length regulator, a mercaptan is used.

11. Process according to claim 10, characterized in that, as mercaptan, tertiary dodecyl mercaptan or tertiary nonyl mercaptan is used.

12. Object wholly or partly made from a copolymer prepared according to any one of the claims 1—11.

**Revendications**

1. Procédé pour la préparation d'un copolymère d'un composé de vinyle aromatique et d'un nitrile insaturé, facultativement en présence d'une caoutchouc, par polymérisation d'une émulsion du composé de vinyle aromatique, du nitrile insaturé, facultativement du caoutchouc, d'un ou de plusieurs émulsifiants, d'un ou de plusieurs régulateurs de longueur de chaîne organosoufre et d'un ou de plusieurs peroxydes et par traitement du latex, obtenu après l'achèvement de la polymérisation, après une coagulation en un copolymère, caractérişé en ce qu'une émulsion du monomère de vinyle aromatique, du régulateur de longueur de chaîne organosoufre et de l'émulsifiant est préparée dans de l'eau, après quoi le nitrile insaturé et l'initiateur sont ajoutés, séparément ou ensemble, et la polymérisation est commencée.

2. Procédé selon la revendication 1, caractérisé en ce qu'un copolymère est préparé à partir de styrène et/ou d'$\alpha$-méthylstyrène et d'acrylonitrile.

3. Procédé selon la revendication 1, caractérisé en ce qu'un copolymère de greffe est préparé à partir de styrène et/ou d'$\alpha$-méthylstyrène et d'acrylonitrile sur un latex polybutadiène.

4. Procédé selon l'une des revendications 1—3, caractérisé en ce que l'émulsion du monomère de vinyle aromatique, du régulateur de longueur de chaîne organosoufre et de l'émulsifiant est préparée dans de l'eau par agitation à une vitesse d'agitateur d'au moins 1,0 m/s.

5. Procédé selon la revendication 4, caractérisé en ce que la vitesse d'extrémité d'agitateur est d'au moins 1,5 m/s.

6. Procédé selon l'une des revendications 1—5, caractérisé en ce que la vitesse d'extrémité d'agitateur est au plus de 30 m/s.

7. Procédé selon l'une des revendications 1—6, caractérisé en ce que l'émulsion de monomère de vinyle aromatique, de régulateur de longueur de chaîne organosoufre et d'émulsifiant est préparée dans de l'eau à une température comprise entre 10 et 40°C.

8. Procédé selon l'une des revendications 1—7, caractérisé en ce que, comme émulsifiant, on utilise un émulsifiant anionique.

9. Procédé selon la revendication 3, caractérisé en ce qu'on utilise un initiateur soluble dans l'eau.

10. Procédé selon l'une des revendications 1—9, caractérisé en ce que, comme régulateur de longueur de chaîne organosoufre, on utilise un mercaptan.

11. Procédé selon la revendication 10, caractérisé en ce que, comme mercaptan, on utilise un mercaptan dodécyle tertiaire ou un mercaptan nonyle tertiaire.

12. Objet fabriqué entièrement ou partiellement à partir d'un copolymère préparé selon l'une des revendications 1—11.

**Patentansprüche**

1. Verfahren zur Herstellung eines Copolymers aus einer vinylaromatischen Verbindung und einem ungesättigten Nitril, wahlweise in Anwesenheit eines Kautschuks, durch Polymerisieren einer Emulsion der vinylaromatischen Verbindung, des ungesättigten Nitrils, wahlweise des Kautschuks, eines oder mehreren Emulgatoren, eines oder mehreren Organoschwefel-Kettenlängenregulatoren und eines oder mehreren Peroxide sowie durch Verarbeitung des nach der Vollendung der Polymerisation erhaltenen Latex, nach Koagulation zu einem Copolymer, dadurch gekennzeichnet, dass eine Emulsion aus dem vinylaromatischen Monomer, dem Organoschwefel-Kettenlängenregulator und dem Emulgator in Wasser zubereitet wird, wonach das ungesättigte Nitril und der Initiniator, getrennt oder gemeinsam, hinzugefügt, werden und die Polymerisation beginnt.

2. Verfahren nach Anspruch 1, dadurch gekennzeichnet, dass ein Copolymer aus Styrol und/oder $\alpha$-Methylstyrol and Acrylnitril hergestellt wird.

3. Verfahren nach Anspruch 1, dadurch gekennzeichnet, dass ein Pfropfcopolymer aus Styrol und/oder $\alpha$-Methylstyrol und Acrylnitril auf einem Polybutadienlatex hergestellt wird.

4. Verfahren nach einem oder mehreren der Ansprüche 1—3, dadurch gekennzeichnet, dass die Emulsion aus dem vinylaromatischen Monomer, dem Organoschwefel-Kettenlängenregulator und dem Emulgator in Wasser durch Rühren mit einer Spitzengeschwindigkeit von mindestens 1.0 m/s hergestellt wird.

5. Verfahren nach Anspruch 4, dadurch gekennzeichnet, dass die Spitzengeschwindigkeit mindestens 1,5 m/s beträgt.

6. Verfahren nach einem der Ansprüche 1—5, dadurch gekennzeichet, dass die Spitzengeschwindigkeit höchstens 30 m/s beträgt.

7. Verfahren nach einem oder mehreren der Ansprüche 1—6, dadurch gekennzeichnet, dass die Emulsion aus vinylaromatischem Monomer, Organoschwefel-Kettenlängenregulator und Emulgator in Wasser bei einer Temperatur zwischen 10 und 40°C zubereitet wird.

8. Verfahren nach einem oder mehreren der Ansprüche 1—7, dadurch gekennzeichnet, dass als Emulgator ein anionischer Emulgator verwendet wird.

9. Verfahren nach Anspruch 3, dadurch gekennzeichnet, dass ein wasserlöslicher Initiator verwendet wird.

10. Verfahren nach einem doder mehreren der Ansprüche 1—9, dadurch gekennzeichnet, dass als Organoschwefel-Kettenlängenregulator ein Mercaptan verwendet wird.

11. Verfahren nach Anspruch 10, dadurch gekennzeichnet, dass als Mercaptan tertiäres Dodecylmercaptan oder tertiäres Nonylmercaptan verwendet wird.

12. Ganz oder teilweise uas einem nach einem der Ansprüche 1—11 zubereiteten Copolymer hergestellter Gegenstand.